# EUROPÄISCHE PATENTANMELDUNG

(11) **EP 2 789 651 A1**
(43) Veröffentlichungstag der Anmeldung: **15.10.2014**
(21) Anmeldenummer: 13163257.2
(22) Anmeldetag: 11.04.2013
(51) Int. Cl.: C08K 3/34, C08K 5/00, C08K 5/02, C08K 5/06, C08K 5/52, C08L 25/04

(54) **Flammschutzmittelzusammensetzung zur Verwendung in Styrolpolymerschaumstoffen**

(71) Anmelder: BASF SE, 67056 Ludwigshafen (DE)
(72) Erfinder: Däschlein, Christian, 68199 Mannheim (DE); Fischer, Horst, 74834 Elztal-Auerbach (DE); Schröder, Cathrin, 68305 Mannheim (DE); Scherzer, Dietrich, 67433 Neustadt (DE); Merkel, Peter, 67308 Zellertal (DE); Dietzen, Franz-Josef, 67454 Hassloch (DE); Bellin, Ingo, 68307 Mannheim (DE)

(57) **Zusammenfassung**

Eine Flammschutzmittelmischung, enthaltend
(a) mindestens ein thermoplastisches Polymer (P),
(b) mindestens eine organische Bromverbindung mit einem Bromgehalt im Bereich von 40 bis 90 Gew.-% als Flammschutzmittel (FR),
(c) gegebenenfalls ein oder mehrere Flammschutzsynergisten (FS),
(d) mindestens ein Alumosilikat als Stabilisator (S1),
(e) mindestens ein Phosphit als Stabilisator (S2) und
(f) gegebenenfalls ein oder mehrere Säurefänger (S3),

sowie Verwendung der Flammschutzmittelmischung zur Herstellung von flammgeschützten Styrolpolymerschaumstoffen.

## Beschreibung

Die vorliegende Erfindung betrifft eine Flammschutzmittelmischung, die
(a) mindestens ein thermoplastisches Polymer (P),
(b) mindestens eine organische Bromverbindung mit einem Bromgehalt im Bereich von 40 bis 90 Gew.-% als Flammschutzmittel (FR),
(c) gegebenenfalls ein oder mehrere Flammschutzsynergisten (FS),
(d) mindestens ein Alumosilikat als Stabilisator (S1),
(e) mindestens ein Phosphit als Stabilisator (S2) und
(f) gegebenenfalls ein oder mehrere Säurefänger (S3),
enthält, sowie deren Verwendung zur Herstellung von flammgeschützten Styrolpolymerschaumstoffen.

Viele Polymere wie Polyolefine, Polyamide und Polystyrol sind brandgefährdet und müssen daher für viele Anwendungen mit Flammschutzmitteln ausgerüstet werden, um ein zufriedenstellendes Brandverhalten zu zeigen. Eine bei Polymeren häufig eingesetzte Klasse von Flammschutzmitteln sind halogenierte organische Flammschutzmittel.

Problematisch bei der Verwendung der halogenierten organischen Flammschutzverbindungen in Polymeren ist, dass die Polymere in der Regel bei erhöhten Temperaturen mit den Flammschutzmitteln verarbeitet werden, um eine gleichmäßige Verteilung der Flammschutzmittel in der Polymermatrix zu erreichen. Bei den dabei erforderlichen Temperaturen findet häufig schon die Zersetzung eines Teiles der eingesetzten halogenierten Flammschutzmittel statt. Insbesondere bei Extrusionsprozessen erhöht sich die Temperaturbelastung für die thermosensiblen Flammschutzmittel aufgrund der Verweilzeit und durch lokale, scherinduzierte Temperaturspitzen. Die Flammschutzadditive können hierbei abgebaut und die effektiv wirksame Menge im Produkt verringert werden. Zudem wirkt der beim Abbau der Additive entstehende Halogenwasserstoff korrosiv auf die eingesetzten Anlagen. Schließlich führt der beschriebene Abbau häufig zu unerwünschten Verfärbungen im Produkt.

Man ist daher dazu übergegangen, den Polymeren neben dem halogenierten organischen Flammschutzmittel einen Stabilisator zuzusetzen, der die Zersetzung des Flammschutzmittels bei der Verarbeitung der Polymere verhindern oder zumindest verringern soll.

Aus der WO 98/16574 ist die Verwendung von Zeolith A als Wärmestabilisator für halogenierte Flammschutzmittel in Styrolpolymerschaumstoffen bekannt.

Gemäß WO 98/16579 werden Zinkverbindungen wie Zinkstearat in Kombination mit Zeolithen als thermische Stabilisatoren in halogenhaltigen Flammschutzformulierungen eingesetzt.

Nach WO 2012/016906 können als thermische Stabilisatoren für organische halogenierte Flammschutzmittel mit Carbonsäuren teilveresterte Polyole, beispielsweise Glycerinmonstearat, eingesetzt werden.

Die WO 2012/080285 beschreibt die Stabilisierung von aliphatischen, bromhaltigen Polymeren bei der Verarbeitung in Polymerschmelzen bei hohen Temperaturen durch eine Mischung von Alkylphosphiten und Epoxyverbindungen und deren Verwendung in Polystyrolschaumstoffen.

Weiterhin können die bei Zersetzung der halogenierten Flammschutzmittel entstehenden Halogenwasserstoffe durch Säurefänger abgefangen werden, wie dies beispielsweise in der WO 2009/065880 erwähnt wird. Dazu werden beispielsweise Hydroxide des Magnesiums, Aluminiums oder Zinks oder auch Alkalimetallcarbonate oder Alkalimetallhydrogencarbonate verwendet.

Trotz der bereits bekannten thermischen Stabilisatoren für organische halogenierte Flammschutzmittel besteht Bedarf an weiteren thermischen Stabilisatoren, die eine gute Wirksamkeit auf die Stabilität der Flammschutzmittel bei der Verarbeitung der Polymeren zeigen und gleichzeitig die schützende Wirkung der Flammschutzmittel nicht negativ beeinflussen. Die mit halogeniertem Flammschutzmittel und thermischem Stabilisator ausgerüsteten Polymere sollen weiterhin ein gutes Brandverhalten zeigen.

Aufgabe der vorliegenden Erfindung war es, eine Flammschutzmittelmischung mit verbesserter thermischer Stabilität zu finden, die insbesondere zur Herstellung von flammgeschützten Styrolpolymerschaumstoffen geeignet ist und eine Einarbeitung von Flammschutzmittelmischungen auf Basis von bromierten organischen Verbindungen durch Extrusion bei Temperaturen über 180°C ermöglicht. Dabei sollte die Flammschutzwirkung erhalten und die Freisetzung korrosiver Abbauprodukte weitgehend vermieden werden.

Demgemäß wurde eine Flammschutzmittelmischung gefunden, die
(a) mindestens ein thermoplastisches Polymer (P),
(b) mindestens eine organische Bromverbindung mit einem Bromgehalt im Bereich von 40 bis 90 Gew.-%, bevorzugt im Bereich von 50 bis 80 Gew.-%, als Flammschutzmittel (FR),
(c) gegebenenfalls ein oder mehrere Flammschutzsynergisten (FS),
(d) mindestens ein Alumosilikat als Stabilisator (S1),
(e) mindestens ein Phosphit als Stabilisator (S2) und
(f) gegebenenfalls ein oder mehrere Säurefänger (S3),
enthält.

Eine bevorzugte Flammschutzmittelmischung besteht aus
(a) 5 bis 80 Gew.-%, bevorzugt 30 bis 60 Gew.-%, mindestens eines thermoplastischen Polymers,
(b) 19 bis 55 Gew.-%, bevorzugt 26 bis 50 Gew.-%, mindestens einer organischen Bromverbindung mit einem Bromgehalt im Bereich von 40 bis 90 Gew.-%, bevorzugt im Bereich von 50 bis 80 Gew.-%, als Flammschutzmittel (FR),
(c) 0 bis 10 Gew.-%, bevorzugt 1 bis 8 Gew.-%, ein oder mehrerer Flammschutzsynergisten (FS),
(d) 0,5 bis 10 Gew.-%, bevorzugt 1 bis 4 Gew.-%, mindestens eines Alumosilikates als Stabilisator (S1),
(e) 0,5 bis 10 Gew.-%, bevorzugt 1 bis 4 Gew.-%, mindestens eines Phosphits als Stabilisator (S2) und
(f) 0 bis 10 Gew.-%, bevorzugt 1 bis 4 Gew.-%, ein oder mehrerer Säurefänger (S3).

Als thermoplastisches Polymer (P) enthält die Flammschutzmittelmischung bevorzugt mindestens ein Styrolpolymer. Geeignete Styrolpolymere sind Homo- oder Copolymere, die einpolymerisierte Einheiten aus vinylaromatischen Monomeren, insbesondere Styrol, enthalten. Beispiele hierfür sind Homopolystyrol (glasklares Polystyrol, GPPS), Schlagzähpolystyrol (HIPS), anionisch polymerisiertes Polystyrol oder Schlagzähpolystyrol (A-IPS), Styrol-α-Methstyrolcopolymere, Acrylnitril-Butadien-Styrolpolymerisate (ABS), Styrol-Acrylnitril-Polymer (SAN) Acrylnitril-Styrol-Acrylester (ASA), Styrolacrylate wie Styrolmethylacrylat (SMA) und Styrolmethylmethacrylat (SMMA), Methyacrylat-Butadien-Styrol (MBS), Methylmethacrylat-Acrylnitril-Butadien-Styrol (MABS)- polymerisate, Styrol-N-Phenylmaleinsäureimid-Copolymere (SPMI) oder Mischungen davon. Die genannten Styrolpolymeren können mit Polyolefinen, wie Polyethylen oder Polypropylen und Polyphenylenether (PPE) abgemischt werden.

Als Flammschutzmittel (FR) werden organische Bromverbindung mit einem Bromgehalt im Bereich von 40 bis 90 Gew.-%, bevorzugt im Bereich von 50 bis 80 Gew.-%, eingesetzt. Insbesondere geeignet sind aliphatische, cycloaliphatische und aromatische Bromverbindungen, wie Hexabromcyclododekan (HBCD), Pentabrommonochlorcyclohexan, Pentabromphenylallylether oderTetrabrombisphenol-A-bis(allylether).

Desweiteren geeignet sind halogenierte Polymere, beispielsweise halogenierte Styrol-Butadien-Blockcopolymere. Die halogenierten Polymeren weisen bevorzugt ein mittleres Molekulargewicht im Bereich von 5.000 bis 300.000, insbesondere 30.000 - 150.000, bestimmt mittels Gelpermeationschromatographie (GPC) auf. Das halogenierte Polymer weist bevorzugt in der thermogravimetrischen Analyse (TGA, gemessen nach DIN 51006 - Thermische Analyse (TA), Thermogravimetrie (TG, Grundlagen) einen Gewichtsverlust von höchstens 5 Gew.-% bis zu einer Temperatur von 220°C und einer Aufheizrate von 30 K/5 min auf. Bevorzugte halogenierte Polymere sind bromiertes Polystyrol oder Styrol-Butadien-Blockcopolymer mit einem Bromgehalt im Bereich von 40 bis 80 Gew.-%. Besonders bevorzugt werden bromierte Styrol-Butadien-Blockcopolymere, wie in WO 2007/058736 beschrieben.

Geeignete Flammschutzsynergisten (FS) sind thermische Radikalbildner mit Halbwertszeiten von 6 Minuten bei Temperaturen im Bereich von 110 bis 300°C, bevorzugt 140 bis 230°C. Besonders bevorzugt werden Dicumyl, Dicumylperoxid, Cumylhydroperoxid, Di-tert.-butyl-peroxid, Tert.-butyl-hydroperoxid oder Mischungen davon, eingesetzt.

Als Stabilisator (S1) enthält die Flammschutzmittelmischung Alumosilikate, bevorzugt Zeolithe des Typs Zeolith A.

Als Stabilisator (S2) enthält die Flammschutzmittelmischung mindestens ein Phosphit. Bevorzugt ein cyclisches Diphoshit, wie die kommerziell erhältlichen Produkte Bis(2,4-ditert-butylphenyl)pentaerytritol diphosphite (Irgafos® 126) der BASF oder 2,4-dicumylphenyl)pentaerythritol diphosphite (Doverphos® S-9228) oder Distearyl Pentaerythritol Diphosphite (Doverphos®S682) der Firma Dover Chemical Corporation .

Als Säurefänger (S3) eignen sich beispielsweise Al(OH)₃, Mg(OH)₂, Hydrotalcit, NaHCO₃, KOH oder NaOH. Bevorzugt enthält die Flammschutzmittelmischung Hydrotalcit, Al(OH)₃ oder Mg(OH)₂. Es können natürliche oder synthetische Hydrotalkite eingesetzt werden. Synthetische Hydrotalcite werden häufig auch als Dihydrotalcite (DHT) bezeichnet.

Gegenstand der Erfindung ist auch die Verwendung der oben beschriebenen, erfindungsgemäßen Flammschutzmittelmischungen zur Herstellung von flammgeschützten Styrolpolymerschaumstoffen. Hierbei wird die Flammschutzmittelmischung üblicherweise in Mengen eingesetzt, die einen Gehalt an Flammschutzmittel (FR) im Bereich von 0,5 bis 5 Gew.-%, bevorzugt 1 bis 3 Gew.-%, bezogen auf den Schaumstoff, ergibt.

Zur Herstellung von expandierbaren Styolpolymergranulaten (EPS) kann die erfindungsgemäße Flammschutzmittelmischung in eine Styrolpolymerschmelze eingemischt, durch eine Düsenplatte extrudiert und in einem Unterwassergranulator unter Druck granuliert werden. Geeignete Verfahrensbedingungen und weitere Additive, wie IR-Absorber, sind beispielsweise in WO 2009/065880 und WO 2011/073141 beschrieben.

Zur Herstellung von Styolpolymerextrusionsschaumstoffen (XPS) kann die erfindungsgemäße Flammschutzmittelmischung in eine Styrolpolymerschmelze eingemischt und durch eine Schlitzdüse extrudiert werden. Geeignete Verfahrensbedingungen und weitere Additive, wie IR-Absorber, sind beispielsweise in WO 2011/073141 beschrieben.

### Beispiele

**Einsatzstoffe:**

| | |
|---|---|
| PS 158K Q4 | Polystyrol der Styrolution GmbH (MVR (200 °C, 5 kg) von 3 ml/10 min, Vicat-Erweichungstemperatur (VST/A/50) von 106 °C) |

**Flammschutzmittel:**

| | |
|---|---|
| FR1 | BE51, BPA-basierte Ester von Chemtura, CAS-Nr.: 25327-89-3 |
| FR2 | FR720, BPA-basierte Ester von ICL Industrial Products, CAS-Nr.: 21850-44-2 |
| FR3 | bromiertes Styrol-Butadien-Diblockcopolymer (Mw ~140000 g/mol, hergestellt nach WO 2007058736, mit einem Br-Gehalt von ca. 65 Gew.- %) |
| FR4 | F-2001, bromiertes Epoxy-System von ICL Industrial Products, CAS-Nr.: 68928-70-1), |
| FR 5 | Tetrabromobisphenol-A, bromiertes BPA (ABCR, CAS-Nr.: 79-94-7), |
| HBCD | Hexabromcyclododecan von ICL Industrial Products, CAS-Nr.: 3194-55-6) |
| F2200 HM | bromiertes Epoxidharz der ICL Industrial Products), |

**Flammschutzsynergist:**

| | |
|---|---|
| FS1 | Dicumyl |

### Stabilisatoren:

S1: Zeolithe
   Zeolith A (Sigma Aldrich),
S2: Phosphite
   Doverphos S-9228 (Dover Chemical Corporation),
   Doverphos S-982 (Dover Chemical Corporation),
   Irgafos 126 (BASF SE),
S3: Säurefänger
   Hydrotalcit (Kyowa Chemical Industriy Co.),
   Al(OH)₃ (Nabaltec AG),
   Al₂O₃ (Sigma Aldrich),
   Mg(OH)₂ (Albemerle Co.),
Glycerinmonostearat (Evonik Goldschmidt),
   Irgastab FS042 (BASF SE),
   Uvinol 4050 (BASF SE),

### A) Thermostabilitätsmessungen

Die Eignung verschiedener Verbindungen als thermische Stabilisatoren für organische, bromhaltige Flammschutzmittel wurde getestet, indem die HBr-Freisetzung bei 200 °C (FR1, FR2, FR3) bzw. 230°C (FR4, FR5) in Analogie zur Bestimmung der Thermostabilität von PVC (HCl-Freisetzung gemäß DIN 53381, Verfahren B) bestimmt wurde. Dazu wurden jeweils 1g eines halogenierten organischen Flammschutzmittels und ggf. 0,2 g des thermischen Stabilisators in ein Schlenkrohr eingefüllt, das mit einem Gummistopfer verschlossen wurde, der zwei Glasrohre aufwies. Durch das eine Glasrohr wurde Stickstoff eingeleitet und durch das zweite Glasrohr wieder abgeleitet. Der Abgasstrom wurde durch destilliertes Wasser geführt und die Leitfähigkeit des Wassers in Abhängigkeit von der Zeit aufgezeichnet. Der sich bei Zersetzung der halogenhaltigen Flammschutzmittel bildende Halogenwasserstoff wird durch den Trägergasstrom in das Wasser eingeleitet und erhöht dessen Leitfähigkeit. Als Maß für die Stabilisierung wird die Stabilitätszeit tₛₜ herangezogen, welche die Zeit angibt, nach der sich die Leitfähigkeit um 50 Mikro Scm⁻¹ geändert hat.

Die Ergebnisse sind in Tabelle 1 dargestellt

**Tabelle 1 Einfluss unterschiedlicher Stabilisatoren auf die Stabilität von bromierten organischen Flammschutzmitteln bei Temperatur 200 °C bzw. 230°C (Versuche mit *).**

| Bsp. | Flammschutzmittel | Stabilisator | tst [min] |
|---|---|---|---|
| T1 | 1 g HBCD | - | 43 |
| T2 | 1 g HBCD | 0,2 g Al(OH)₃ | 50 |
| T3 | 1 g HBCD | 0,2 g Hydrotalcit | 65 |
| T4 | 1 g HBCD | 0,2 g Zeolith A | 128 |
| T5 | 1 g HBCD | 0,2 g Irgafos 126 | 153 |
| T6 | 1 g HBCD | 0,2 g Doverphos S-9228 | 140 |
| T7 | 1 g FR1 | - | 15 |
| T8 | 1 g FR1 | 0,2 g Hydrotalcit | 15 |
| T9 | 1 g FR1 | 0,2 g Zeolith A | 35 |
| T10 | 1 g FR1 | 0,2 g Irgafos 126 | 56 |
| T11 | 1 g FR2 | - | 290 |
| T12 | 1 g FR2 | 0,2 g Zeolith A | 636 |
| T13 | 1 g FR2 | 0,2 g Irgafos 126 | 1200 |
| T14 | 1 g FR3 | - | 50 |
| T15 | 1 g FR3 | 0,2 g Mg(OH)₂ | 68 |
| T16 | 1 g FR3 | 0,2 g Hydrotalcit | 60 |
| T17 | 1 g FR3 | 0,2 g Al(OH)₃ | 64 |
| T18 | 1 g FR3 | 0,2 g Doverphos S-9228 | 203 |
| T19 | 1 g FR3 | 0,2 g Doverphos S-682 | 320 |
| T20 | 1 g FR3 | 0,2 g Irgafos 126 | 120 |
| T21 | 1 g FR3 | 0,2 g Zeolith A | 305 |
| T22 | 1 g FR3 | 0,2 g Kaolin | 84 |
| T23 | 1 g FR3 | 0,2 g Irgastab FS042 | 15 |
| T24 | 1 g FR3 | 0,2 g Uvinol 4050 | 21 |
| T25 | 1 g FR3 | 0,2 g Al₂O₃ | 142 |
| T26 | 1 g FR3 | F2200 HM | 90 |
| T27 | 1 g FR3 | Glycerinmonostearat | 145 |
| T28* | 1 g FR4 | - | 1800 |
| T29* | 1 g FR4 | 0,2 g Irgafos 126 | 3200 |
| T30* | 1 g FR4 | 0,2 g Zeolith A | 2800 |
| T31 * | 1 g FR5 | - | 186 |
| T32* | 1 g FR5 | 0,2 g Irgafos 126 | 1190 |
| T33* | 1 g FR5 | 0,2 g Zeolith A | 636 |
| T34* | 1 g FR5 | 0,2 g Hydrotalcit | 1020 |
| T35 | 1 g HBCD | 0,1 g Zeolith A + 0,1 g Irgafos 126 | 265 |
| T36 | 1 g HBCD | 0,1 g Zeolith A + Doverphos S-9228 | 215 |
| T37 | 1 g FR1 | 0,1 g Zeolith A + 0,1 g Irgafos 126 | 76 |
| T38 | 1 g FR2 | 0,1 g Zeolith A + 0,1 g Irgafos 126 | >2800 |
| T39 | 1 g FR3 | 0,1 g Zeolith A + 0,1 g Irgafos 126 | 405 |
| T40 | 1 g FR3 | 0,1 g Zeolith A + Doverphos S-9228 | 200 |
| T41 | 1 g FR3 | 0,1 g Zeolith A + Doverphos S-682 | 210 |
| T42 | 1 g FR3 | 0,066 g Zeolith A + 0,066 g Irgafos 126 + 0,066 g Mg(OH)₂ | 360 |
| T43 | 1 g FR3 | 0,066 g Zeolith A + 0,066 g Irgafos 126 + 0,066 g Al(OH)₃ | 480 |
| T44 | 1 g FR3 | 0,066 g Zeolith A + 0,066 g Irgafos 126 + 0,066 g Hydrotalcit | 520 |
| T45* | 1 g FR4 | 0,1 g Zeolith A + 0,1 g Irgafos 126 | >4000 |
| T46* | 1 g FR5 | 0,1 g Zeolith A + 0,1 g Irgafos 126 | >2800 |
| T47* | 1 g FR5 | 0,066 g Zeolith A + 0,066 g Irgafos 126 + 0,066 g Hydrotalcit | 1382 |

### B) Brandverhalten von Schaumstoffen aus expandierbaren Styrolpolymeren

### Beispiele 1 bis 6 und Vergleichsversuche V1 bis V7

Als Flammschutzmittelmischung wurde ein Polystyrolbatch (PS 158K Q4) mit der Zusammensetzung gemäß Tabelle 2 eingesetzt. Die Batches wurde so eingesetzt, dass die entsprechenden Schaumstoffe jeweils 1,3 (HBCD) bzw. 1,7 Gew.- % (FR1, FR2 bzw. FR3) des Flammschutzmittels enthielten.

Expandierbare Polystyrolgranulate wurden durch Schmelzeextrusion erhalten. Hierzu wurden ca. 6 Gew.- % n-Pentan in eine Polystyrolschmelze aus PS 158K Q4 (Polystyrol mit einem MVR (200 °C, 5 kg) von 3 ml/10 min und einer Vicat-Erweichungstemperatur (VST/A/50) von 106 °C (Handelsprodukt der Styrolution GmbH)) eingemischt. Nach Abkühlen der treibmittelhaltigen Polystyrolschmelze von ursprünglich 240 °C auf eine Temperatur von 180 °C wurde eine Flammschutzmittelmischung mit der Zusammensetzung gemäß Tabelle 2 über einen Seitenstromextruder in den Hauptstrom eingemischt. Die Menge der Flammschutzmittelmischung wurde so bemessen, dass das expandierbare Polystyrol 1,3 Gew.-% HBCD bzw. 1,7 Gew.-% FR1, FR2 bzw. FR3 enthielt. Das Gemisch aus Polystyrolschmelze, Treibmittel, Flammschutzmittel und thermischem Stabilisator wurde mit einer Förderrate von 70 kg/h durch eine Düsenplatte gefördert. Mit Hilfe einer druckbeaufschlagten Unterwassergranulierung wurden kompakte Granulate aus expandierbarem Polystyrol mit enger Größenverteilung erhalten. Das expandierbare Polystyrol enthielt jeweils 1,3 (HBCD) bzw. 1,7 Gew.- % (FR1, FR2 bzw. FR3) Flammschutzmittel, 0,2 Gew.-% Dicumyl und in Summe 0,2 Gew.-% eines thermischen Stabilisators gemäß den Angaben in Tabelle 2.

Durch Einwirkung von Wasserdampf wurden die Granulate aus expandierbarem Polystyrol vorgeschäumt und nach 12-stündiger Lagerung durch weitere Behandlung mit Wasserdampf in einer geschlossenen Form zu Schaumstoffblöcken mit einer Dichte von ca. 15 kg/m³ verschweißt.

Die Ermittlung des Brandverhaltens der Schaumstoffplatten erfolgte nach 72-stündiger Lagerung bei einer Schaumstoffdichte von ca. 15 kg/m³ gemäß DIN 4102. Diese Prüfung stellt die Beanspruchung durch eine kleine, definierte Flamme (Streichholzflamme) dar. Unter dieser Beanspruchung müssen die Entzündbarkeit und die Flammenausbreitung innerhalb einer bestimmten Zeit begrenzt sein. Die Prüfung wird in einem mit einem Brenner ausgerüsteten Brennkasten durchgeführt. Dabei wird die Probe 15 Sekunden beflammt und anschließend die Flamme entfernt. Die Dauer zwischen Beginn der Beflammung und dem Zeitpunkt, an der die Flammenspitze der brennenden Probe eine bestimmte Messmarke erreicht, wird gemessen sofern die Flamme nicht von selbst erlischt.

Die Ergebnisse sind in Tabelle 2 wiedergegeben.

### C) Brandverhalten von Polystyrolextrusionsschaumstoffplatten

### Beispiel 7

Die Herstellung der Schaumstoffplatten erfolgte auf einer Tandem-Extrusionsanlage. PS 158K Q4 (Polystyrol mit einem MVR (200 °C, 5 kg) von 3 ml/10 min und einer Vicat-Erweichungstemperatur (VST/A/50) von 106 °C (Handelsprodukt der Styrolution GmbH)) wurde zusammen mit der Flammschutzmittelmischung aus Beispiel 6 (Polystyrolbatch) kontinuierlich einem Aufschmelzextruder zugeführt. Durch eine in dem Aufschmelzextruder eingebrachte Injektionsöffnung wurde kontinuierlich Treibmittel (2,5 Gew.-% CO₂, 2,5 Gew.-% Aceton, 1 % i-Butan) zugeführt. Der Gesamtdurchsatz inkl. der Treibmittel betrug 60 kg/h. Die treibmittelhaltige Schmelze wurde in einem nachfolgenden Kühlextruder abgekühlt und durch eine Schlitzdüse extrudiert. Die aufschäumende Schmelze wurde durch eine beheizte Kalibrierung, deren Oberflächen mit Teflon ausgestattet waren, über ein Rollenband abgezogen und zu Platten mit 100 mm Breite und 25 mm Dicke geformt. Die Plattendichte betrug 35 kg/m³.

Die anschließende Messung zur Ermittlung des Brandverhaltens der Schaumstoffplatten erfolgten nach 6 wöchiger Lagerung gemäß DIN 4102. Die Schaumstoffplatten erreichten die Klassifizierung B2.

**Tabelle 2: Zusammensetzung der Flammschutzmittelmischungen und Brandschutzverhalten der Beispiele 1 bis 6 und Vergleichsversuche V1 bis V7.**

| Beispiel | Polystyrol [Gew.-%] | Flammschutzmittel [Gew.-%] | Flammschutzsynergist Dicumyl [Gew.-%] | Stabilisator S1 Zeolith A [Gew.-%] | Stabilisator S2 Irgafos 126 [Gew.-%] | Stabilisator S3 Hydrotalcit [Gew.-%] | Brandschutz-test [DIN 4102] |
|---|---|---|---|---|---|---|---|
| 1 | 53 | 38 (FR3) | 4,5 | 2,25 | 2,25 | | B2 |
| 2 | 53 | 38 (FR3) | 4,5 | 1,5 | 1,5 | 1,5 | B2 |
| 3 | 43 | 45 (HBCD) | 6 | 2 | 2 | 2 | B2 |
| 4 | 53 | 38 (FR1) | 4,5 | 1,5 | 1,5 | 1,5 | B2 |
| 5 | 53 | 38 (FR2) | 4,5 | 1,5 | 1,5 | 1,5 | B2 |
| 6 | 53 | 38 (FR3) | 4,5 | 1,5 | 1,5 | 1,5 Al(OH)₃ | B2 |
| V1 | 43 | 45 (HBCD) | 6 | | | 6 Mg(OH)₂ | Nicht bestanden |
| V2 | 43 | 45 (HBCD) | 6 | | | 6 | Nicht bestanden |
| V3 | 53 | 38 (FR1) | 4,5 | | | 4,5 | Nicht bestanden |
| V4 | 53 | 38 (FR2) | 4,5 | | | 4,5 | Nicht bestanden |
| V5 | 53 | 38 (FR3) | 4,5 | | | 4,5 Mg(OH)₂ | Nicht bestanden |
| V6 | 53 | 38 (FR3) | 4,5 | | | 4,5 | Nicht bestanden |
| V7 | 53 | 38 (FR3) | 4,5 | | | 4,5 Al(OH)₃ | Nicht bestanden |

## Patentansprüche

1. Flammschutzmittelmischung, enthaltend
(a) mindestens ein thermoplastisches Polymer,
(b) mindestens eine organische Bromverbindung mit einem Bromgehalt im Bereich von 40 bis 90 Gew.-% als Flammschutzmittel (FR),
(c) gegebenenfalls ein oder mehrere Flammschutzsynergisten (FS),
(d) mindestens ein Alumosilikat als Stabilisator (S1),
(e) mindestens ein Phosphit als Stabilisator (S2) und
(f) gegebenenfalls ein oder mehrere Säurefänger (S3).

2. Flammschutzmittelmischung nach Anspruch1, enthaltend
(a) 5 bis 80 Gew.-% mindestens eines thermoplastischen Polymers,
(b) 19 bis 55 Gew.-% mindestens einer organischen Bromverbindung mit einem Bromgehalt im Bereich von 40 bis 90 Gew.-%als Flammschutzmittel (FR),
(c) 0 bis 10 Gew.-% ein oder mehrerer Flammschutzsynergisten (FS),
(d) 0,5 bis 10 Gew.-% mindestens eines Alumosilikates als Stabilisator (S1),
(e) 0,5 bis 10 Gew.-%mindestens eines Phosphits als Stabilisator (S2) und
(f) 0 bis 10 Gew.-% ein oder mehrerer Säurefänger (S3).

3. Flammschutzmittelmischung nach Anspruch 1 oder 2, **dadurch gekennzeichnet, dass** sie als thermoplastisches Polymer ein Styrolpolymer enthält.

4. Flammschutzmittelmischung nach einem der Ansprüche 1 bis 3, **dadurch gekennzeichnet, dass** sie als Stabilisator (S1) Zeolithe des Typs Zeolith A enthält.

5. Flammschutzmittelmischung nach einem der Ansprüche 1 bis 4, **dadurch gekennzeichnet, dass** sie als Stabilisator (S2) ein cyclisches Diphoshit enthält.

6. Flammschutzmittelmischung nach einem der Ansprüche 1 bis 5, **dadurch gekennzeichnet, dass** sie als Säurefänger (S3) Hydrotalkit, Al(OH)₃ oder Mg(OH)₂ enthält.

7. Flammschutzmittelmischung nach einem der Ansprüche 1 bis 6, **dadurch gekennzeichnet, dass** sie als Flammschutzsynergist (FS) Dicumyl enthält.

8. Verwendung der Flammschutzmittelmischung nach einem der Ansprüche 1 bis 7 zur Herstellung von flammgeschützten Styrolpolymerschaumstoffen.

9. Verfahren zur Herstellung von expandierbaren Styolpolymergranulaten, **dadurch gekennzeichnet, dass** man eine Flammschutzmittelmischung nach einem der Ansprüche 1 bis 7 in eine Styrolpolymerschmelze einmischt, durch eine Düsenplatte extrudiert und in einem Unterwassergranulator unter Druck granuliert.

10. Verfahren zur Herstellung von Styolpolymerextrusionsschaumstoffen, **dadurch gekennzeichnet, dass** man eine Flammschutzmittelmischung nach einem der Ansprüche 1 bis 7 in eine Styrolpolymerschmelze einmischt und durch eine Schlitzdüse extrudiert.
